(19) Europäisches Patentamt
European Patent Office
Office européen des brevets

(11) **EP 4 773 477 A1**

(12) **EUROPEAN PATENT APPLICATION**
published in accordance with Art. 153(4) EPC

(43) Date of publication:
**08.07.2026 Bulletin 2026/28**

(21) Application number: **24911348.1**

(22) Date of filing: **26.12.2024**

(51) International Patent Classification (IPC):
***H02K 3/24*** (2006.01)   ***H02K 9/19*** (2006.01)

(52) Cooperative Patent Classification (CPC):
Y02T 10/64

(86) International application number:
**PCT/CN2024/142775**

(87) International publication number:
**WO 2025/140427 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 CN 202311814645**

(71) Applicant: **VOYAH Automotive Technology Co., Ltd.**
**Wuhan, Hubei 430109 (CN)**

(72) Inventors:
- **FAN, Peng**
  **Wuhan, Hubei 430050 (CN)**
- **DENG, Xiang**
  **Wuhan, Hubei 430050 (CN)**
- **BI, Shuai**
  **Wuhan, Hubei 430050 (CN)**
- **LIU, Junke**
  **Wuhan, Hubei 430050 (CN)**
- **LIAO, Xianmin**
  **Wuhan, Hubei 430050 (CN)**
- **DENG, Zhen**
  **Wuhan, Hubei 430050 (CN)**
- **ZHOU, Zhongyong**
  **Wuhan, Hubei 430050 (CN)**
- **WANG, Haibin**
  **Wuhan, Hubei 430050 (CN)**
- **MA, Ji**
  **Wuhan, Hubei 430050 (CN)**
- **DU, Meirong**
  **Wuhan, Hubei 430050 (CN)**

(74) Representative: **Bandpay & Greuter**
**11 rue Christophe Colomb**
**75008 Paris (FR)**

(54) **OIL-COOLED MOTOR AND METHOD FOR DESIGNING OIL-COOLED MOTOR**

(57) A method for designing an oil-cooled motor, where the oil-cooled motor includes a housing (1), a rotor, a stator (2) and a cooling pipeline, the rotor is rotatably mounted in the housing; the stator is fixedly mounted in the housing and annularly arranged on an outer peripheral side of the rotor, and the stator includes a stator yoke and a plurality of teeth disposed on a peripheral side of the stator yoke, each tooth is wound with one winding (3), a cooling groove (4) is formed between two adjacent windings, the cooling pipeline includes a cooling pipe (5), the cooling pipe includes a plurality of straight pipe sections (51), which are sequentially communicated and arranged at intervals along a circumferential direction of the stator, and each straight pipe section is embedded in a corresponding cooling groove.

FIG. 1

EP 4 773 477 A1

## Description

### CROSS-REFERENCE TO RELATED APPLICATIONS

This application claims priority to Chinese Patent Application No. 2023118146454, filed with the China National Intellectual Property Administration on December 26, 2023, the entire content of which is incorporated in this application by reference.

### TECHNICAL FIELD

The present disclosure relates to the technical field of motor heat dissipation and, in particular, to an oil-cooled motor and a method for designing an oil-cooled motor.

### BACKGROUND

With the increasing requirements for power density and torque density of drive motors for electric vehicles, motor heat dissipation has become one of the key factors restricting the improvement of their performance.

Due to the harsh working environment and high ambient temperature of electric vehicles, natural cooling alone cannot meet the heat dissipation requirements, and forced cooling is required inside motors. Generally, the design of an electromagnetic structure of the motor determines the temperature field of the motor, and the temperature field of the motor in turn seriously affects the electromagnetic performance of the motor. Therefore, while taking into account power density and torque density, it is necessary to consider the balanced design of the cooling system and electromagnetic structure of the motor to achieve a balance between the electromagnetic performance and heat dissipation performance of the motor.

### SUMMARY

A main object of the present disclosure is to provide an oil-cooled motor and a method for designing the oil-cooled motor, aiming to provide an oil-cooled motor with high overload capacity and remarkable cooling effect.

To achieve the above object, the present disclosure provides an oil-cooled motor, including: a housing; a rotor, rotatably mounted in the housing; a stator, fixedly mounted in the housing, and annularly arranged on an outer peripheral side of the rotor, the stator including a stator yoke and a plurality of teeth disposed on a peripheral side of the stator yoke; a plurality of windings, where each tooth is wound with one winding, and a cooling groove is formed between two adjacent windings; and a cooling pipeline, including a cooling pipe, where the cooling pipe includes a plurality of straight pipe sections, which are sequentially communicated and arranged at intervals along a circumferential direction of the stator, and each straight pipe section is embedded in a corresponding cooling groove.

In some embodiments, a plurality of cooling pipes are provided; the plurality of cooling pipes are arranged at intervals along the circumferential direction of the stator, and arranged in parallel.

In some embodiments, four cooling pipes are provided; and/or a notch width of the cooling groove is set to a, and 4 mm ≤ a ≤ 6 mm.

In some embodiments, an annular air gap is defined between the stator and the rotor;
the oil-cooled motor further includes a heat insulation sleeve extending along an axial direction of the stator and disposed at the air gap, two ends of the heat insulation sleeve are fixedly connected to the housing so as to enclose to form a separation cavity for separating the stator from the rotor, and the separation cavity is provided with a liquid inlet and a liquid outlet, which are respectively communicated with a liquid inlet end and a liquid outlet end of each cooling pipe.

In some embodiments, the straight pipe section extends along an axial direction of the stator; each cooling pipe further includes a plurality of bent pipe sections, and two adjacent straight pipe sections are communicated by one bent pipe section at the same end in an axial direction of the stator.

In some embodiments, the straight pipe section includes a copper pipe; and/or the bent pipe section includes a plastic hose.

In some embodiments, an insulating layer is disposed on an outer peripheral wall of the straight pipe section.

The present disclosure further provides a method for designing an oil-cooled motor, the oil-cooled motor includes a rotor, a stator, and a cooling pipeline, the rotor is rotatably mounted in the housing; the stator is fixedly mounted in the housing, and annularly arranged on an outer peripheral side of the rotor, and the stator includes a stator yoke and a plurality of teeth disposed on a peripheral side of the stator yoke, each tooth is wound with one winding, a cooling groove is formed between two adjacent windings, and the cooling pipeline includes a cooling pipe, the cooling pipe includes a plurality of straight pipe sections, which are sequentially communicated and arranged at intervals along a circumferential direction of the stator, and each straight pipe section is embedded in a corresponding cooling groove; and the method for designing the oil-cooled motor includes the following steps: obtaining a difference between an oil circuit heat dissipation amount and a copper loss value; and obtaining a size of the cooling pipeline according to the oil circuit heat dissipation amount and the copper loss value.

In some embodiments, obtaining the size of the cooling pipeline according to the oil circuit heat dissipation amount and the copper loss value includes: determining a corresponding relationship between an inlet and outlet pressure difference of the cooling pipeline and the size of the cooling pipeline when the difference between the oil circuit heat dissipation amount and the copper loss value meets a preset condition; and determining the size of the cooling pipeline according to the corresponding relationship between the inlet and outlet pressure difference of the cooling pipeline and the size of the cooling pipeline.

In some embodiments, determining the size of the cooling pipeline according to the corresponding relationship between the inlet and outlet pressure difference of the cooling pipeline and the size of the cooling pipeline includes: determining the inlet and outlet pressure difference of the cooling pipeline according to a kinematic viscosity coefficient of oil, a wetted perimeter, an oil inlet flow rate, an axial length of oil passage and a density of cooling oil; and determining the size of the cooling pipeline according to the corresponding relationship between the inlet and outlet pressure difference of the cooling pipeline and the size of the cooling pipeline as well as motor electromagnetism.

In the technical solution of, the rotor is rotatably mounted in the housing, the stator is fixedly mounted in the housing and annularly arranged on the outer peripheral side of the rotor, the stator includes a stator yoke and a plurality of teeth disposed on the peripheral side of the stator yoke, each tooth is wound with one winding, a cooling groove is formed between every two adjacent teeth; the cooling pipeline includes a cooling pipe, the cooling pipe includes a plurality of straight pipe sections, which are sequentially communicated and arranged at intervals along a circumferential direction of the stator, each straight pipe section is embedded in a corresponding cooling groove, and a plurality of cooling pipes are arranged at intervals along the circumferential direction of the stator. By embedding the straight pipe sections in the cooling grooves, when the cooling oil in the cooling pipes flows from a liquid inlet to a liquid outlet, the heat of the stator may be transferred to the windings through an inner wall surface of the cooling grooves, then to the cooling pipes, and then transferred to the cooling oil by pipe walls of the cooling pipes, achieving the heat dissipation purpose, and thereby providing an oil-cooled motor with high overload capacity and remarkable cooling effect.

## BRIEF DESCRIPTION OF DRAWINGS

In order to explain technical solutions in embodiments of the present disclosure or the related art more clearly, the drawings needed to be used in the description of the embodiments or the related art will be briefly introduced below. Obviously, the drawings in the following description are only some embodiments of the present disclosure, and for those of ordinary skill in the art, other drawings may be obtained according to the structures shown in these drawings without creative work.

FIG. 1 is a schematic perspective view of a partial structure of an oil-cooled motor according to some implementations of the present disclosure.
FIG. 2 is a schematic cross-sectional view of the oil-cooled motor in FIG. 1.
FIG. 3 is a schematic perspective view of a cooling pipe in FIG. 1.
FIG. 4 is a schematic view of a heat insulation sleeve in FIG. 1.
FIG. 5 is a schematic top view of the oil-cooled motor in FIG. 1.
FIG. 6 is a schematic bottom view of the oil-cooled motor in FIG. 1.
FIG. 7 is a schematic view of two windings and a cooling groove.
FIG. 8 is a comparison diagram of simulation effects of the influence of different widths of cooling groove on a temperature of the oil-cooled motor in FIG. 1.
FIG. 9 is a flow chart of a method for designing an oil-cooled motor according to some embodiments of the present disclosure.

Description of reference numerals:

| Reference numeral | Name | Reference numeral | Name |
|---|---|---|---|
| 1 | housing | 5a | liquid inlet |
| 2 | stator | 5b | liquid outlet |
| 3 | winding | 51 | straight pipe section |
| 4 | cooling groove | 52 | bent pipe section |
| 5 | cooling pipe | 6 | heat insulation sleeve |

The realization of the purposes, functional characteristics and advantages of the present disclosure will be further described with reference to the embodiments and the drawings.

## DESCRIPTION OF EMBODIMENTS

Technical solutions in embodiments of the present disclosure will be clearly and completely described below in conjunction with the drawings in the embodiments of the present disclosure. Obviously, the described embodiments are only some of the embodiments of the present disclosure, rather than all the embodiments. Based on the embodiments in the present disclosure, all other embodiments obtained by those of ordinary skill in the art without creative work shall fall within the protection scope of the present disclosure.

It should be noted that if there are directional indications (such as up, down, left, right, front, back, ...) in the embodiments of the present disclosure, the directional indications are only used to explain the relative positional relationship, movement situation, etc. between the components under a specific posture (as shown in the drawings). If the specific posture changes, the directional indications also change accordingly.

In addition, if there are descriptions involving "first", "second", etc. in the embodiments of the present disclosure, the descriptions of "first", "second", etc. are only for descriptive purposes, and cannot be understood as indicating or implying their relative importance or implicitly specifying the number of indicated technical features. Thus, the features defined with "first", "second" may explicitly or implicitly include at least one such feature. In addition, the meaning of "and/or" appearing in the full text includes three parallel solutions. Taking "A and/or B" as an example, it includes solution A, solution B, or a solution where A and B are satisfied at the same time. In addition, the technical solutions between the various embodiments may be combined with each other, provided that such combination is achievable by those skilled in the art. When the combination of technical solutions is contradictory or cannot be realized, it should be considered that such a combination of technical solutions does not exist and is not within the protection scope claimed in the present disclosure.

Due to the harsh working environment and high ambient temperature of electric vehicles, natural cooling alone cannot meet the heat dissipation requirements, and forced cooling is required inside motors. Generally, an electromagnetic structure design of the motor determines the temperature field of the motor, and the temperature field of the motor in turn seriously affects the electromagnetic performance of the motor. Therefore, while taking into account power density and torque density, it is necessary to consider the balanced design of the cooling system and electromagnetic structure of the motor to achieve a balance between the electromagnetic performance and heat dissipation performance of the motor.

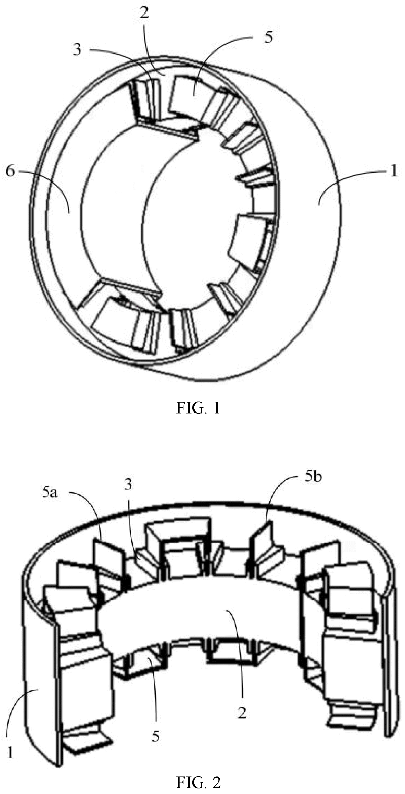

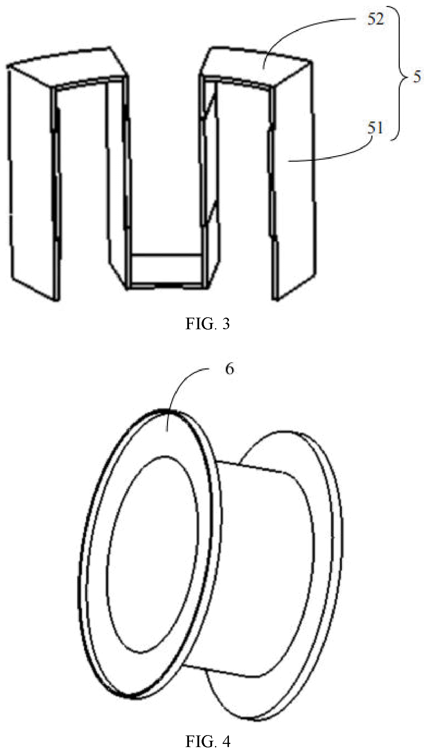

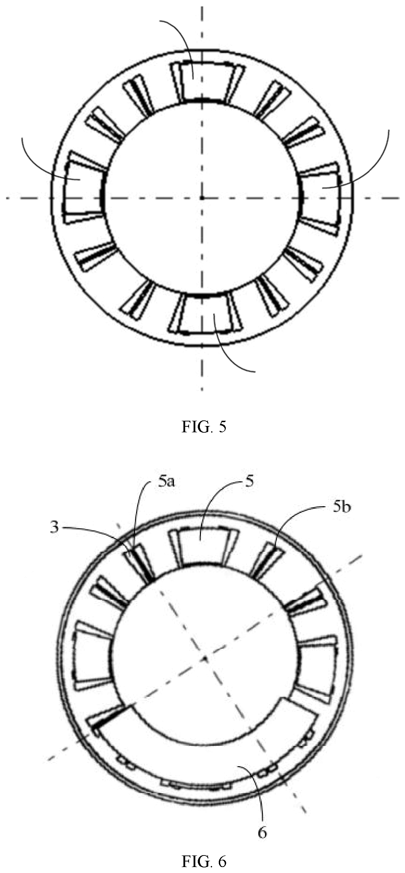

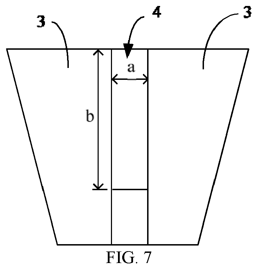

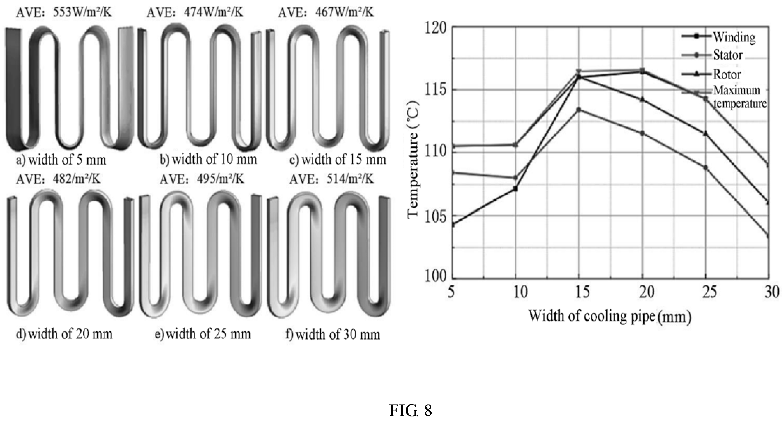

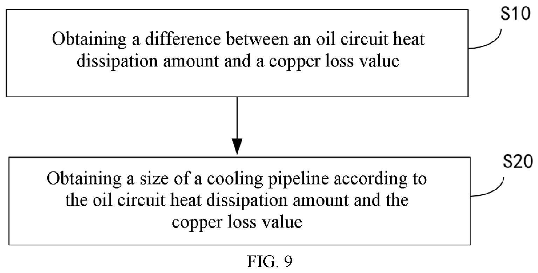

To solve the above problem, the present disclosure provides an oil-cooled motor. FIG. 1 is a schematic perspective view of a partial structure of an embodiment of an oil-cooled motor according to some implementations of the present disclosure; FIG. 2 is a schematic cross-sectional view of the oil-cooled motor in FIG. 1; FIG. 3 is a schematic perspective view of a cooling pipe in FIG. 1; FIG. 4 is a schematic view of a heat insulation sleeve in FIG. 1; FIG. 5 is a schematic top view of the oil-cooled motor in FIG. 1; FIG. 6 is a schematic bottom view of the oil-cooled motor in FIG. 1; FIG. 7 is a schematic view of two windings and a cooling groove; FIG. 8 is a comparison diagram of simulation effects of the influence of different widths of cooling groove on a temperature of the oil-cooled motor in FIG. 1; and FIG. 9 is a flow chart of an embodiment of a method for designing an oil-cooled motor.

Referring to FIG. 1 to FIG. 3, the oil-cooled motor includes a housing 1, a rotor, a stator 2 and a cooling pipeline. The rotor is rotatably mounted in the housing 1. The stator 2 is fixedly mounted in the housing 1, and annularly arranged on an outer peripheral side of the rotor, and the stator 2 includes a stator yoke and a plurality of teeth disposed on a peripheral side of the stator yoke; and a cooling groove 4 is formed between every two adjacent teeth. The cooling pipeline includes a cooling pipe 5, the cooling pipe 5 includes a plurality of straight pipe sections 51, which are sequentially communicated and arranged at intervals along a circumferential direction of the stator 2, and each straight pipe section 51 is embedded in a corresponding cooling groove 4.

It should be noted that for a motor with high rotational speed, the additional copper loss caused by the skin effect and proximity effect usually needs to be considered when calculating the motor copper loss. For a motor with high torque density, a winding 3 of the motor usually generates a lot of heat, resulting in a high temperature in motor grooves. The increase in temperature and the increase in motor copper loss form a positive feedback relationship, which cannot be ignored in the research of the motor temperature field. In some embodiments, losses of the rotor are mainly caused by a large number of spatial and temporal harmonics in the air gap magnetic field. These harmonics mainly include groove harmonics caused by grooves of the stator 2 of the motor, spatial magnetomotive force harmonics caused by different distributions of the windings 3 of the motor, magnetic field harmonics caused by uneven air gap permeability due to uneven air gap, and temporal harmonics contained in the controller current, etc. Especially when the motor is under high-frequency operating conditions, the losses in the rotor caused by magnetic field harmonics are more serious.

In the technical solutions provided in some implementations of the present disclosure, the rotor is rotatably mounted in the housing 1, the stator 2 is fixedly mounted in the housing 1 and annularly arranged on the outer peripheral side of the rotor, the stator 2 may include a stator yoke and a plurality of teeth disposed on the peripheral side of the stator 2 yoke, a groove of the stator 2 is formed between every two adjacent teeth, each tooth is wound with one winding 3, and a cooling groove 4 is formed between every two adjacent windings 3; the cooling pipeline includes a cooling pipe 5, the cooling pipe 5 may include a plurality of straight pipe sections 51, which are sequentially communicated and arranged at intervals along a circumferential direction of the stator 2, each straight pipe section 51 is embedded in a corresponding cooling groove 4, and a plurality of cooling pipes 5 are arranged at intervals along the circumferential direction of the stator 2. By embedding the straight pipe sections 51 in the cooling grooves 4, when the cooling oil in the cooling pipes 5 flows from a liquid inlet 5a to a liquid outlet 5b, the heat of the stator 2 may be transferred to the windings 3 through an inner wall surface of the cooling grooves 4, then to the cooling pipes 5, and transferred to the cooling oil by pipe walls of the cooling pipes 5, achieving the heat dissipation purpose, and thereby providing an oil-cooled motor with high overload capacity and remarkable cooling effect.

In some embodiments, referring to FIG. 5 and FIG. 6, a plurality of cooling pipes 5 may be provided; the plurality of cooling pipes 5 may be arranged at intervals along the circumferential direction of the stator 2 and arranged in parallel. As such, each cooling pipe 5 may perform heat dissipation independently without interfering with each other. This can increase the heat dissipation area, so that more heat can be dissipated through air convection. At the same time, the parallel arrangement of the plurality of cooling pipes 5 can also reduce the internal fluid resistance of each cooling pipe 5 and improve the heat dissipation effect, and also reduce the pressure difference between the liquid inlet 5a and the liquid outlet 5b.

To further improve the cooling effect (especially under high-speed operating conditions), the reasonable distribution of the space of the windings 3 and the space of the straight pipe sections 51 in the grooves of the oil-cooled motor is particularly important for the heat dissipation of the oil-cooled motor. The in-groove oil cooling structure has a relatively poor cooling effect on the motor under high-speed operating conditions for two reasons: first, the equivalent thermal resistance between a core of the stator 2 and the cooling pipe 5 is large, resulting in a high temperature under the same heat flow condition; second, under the condition of ignoring the heat dissipation of the rotor through a rotating shaft and end air, the heat of the rotor is mainly transferred to the teeth of the stator 2 through the air gap by heat conduction, while the in-groove oil cooling structure has a poor cooling effect on the core of the stator 2 of the motor, thus resulting in a high temperature of the rotor. Therefore, in order to balance the temperature of the motor under overload and high-speed operating conditions, a position of the cooling pipe 5 in the groove of the motor is optimized.

In some embodiments, referring to FIG. 7 and FIG. 8, four cooling pipes 5 may be provided; and/or a notch width of the cooling groove 4 is set to a, where $4 \text{ mm} \leq a \leq 6 \text{ mm}$. For example, a value of a may be 4 mm, 5 mm or 6 mm. Under the condition that a groove depth and groove width of the stator 2 are fixed, when the cooling pipes 5 occupy a large space and the windings 3 occupy a small space, the cooling effect is relatively good, but the motor copper loss may increase when the windings 3 are fed with an equal current; on the contrary, the cooling effect may decrease, but the copper loss is relatively small. In some embodiments, when four cooling pipes 5 are provided and the notch width of the cooling groove 4 is set to 5 mm, the cooling effect and the change of copper loss reach an optimal balance.

In some embodiments, referring to FIG. 4, in some embodiments, an annular air gap is defined between the stator 2 and the rotor; the oil-cooled motor further includes a heat insulation sleeve 6 extending along an axial direction of the stator 2, the heat insulation sleeve 6 is disposed at the air gap, and two ends of the heat insulation sleeve 6 are fixedly connected to the housing 1 so as to enclose to form a separation cavity for separating the stator 2 from the rotor, the separation cavity is provided with a liquid inlet 5a and a liquid outlet 5b, which are respectively communicated with a liquid inlet end and a liquid outlet end of each cooling pipe 5. Since the main heat source of the oil-cooled motor is the stator 2 and the rotor is not the largest heat source, the stator 2 and the rotor are separated by the heat insulation sleeve 6, so that the cooling system can be confined in the closed space of the stator 2 and the windings 3 for heat dissipation through a heat dissipation structure, and that the rotor is isolated.

In some embodiments, the straight pipe sections 51 may extend along the axial direction of the stator 2; the cooling pipes 5 may further include a plurality of bent pipe sections 52, and two adjacent straight pipe sections 51 may be communicated by one bent pipe section 52 at the same end in the axial direction of the stator 2. Since the straight pipe sections 51 are connected by the bent pipe sections 52 to form an S-shape, a length of the cooling pipe 5 may be increased, thereby increasing the heat dissipation area and improving the heat dissipation efficiency. The increased heat dissipation area may transfer the heat generated by the motor to the surrounding environment more effectively and prevent the motor from overheating. The axial extension of the straight pipe sections 51 can also increase a contact area between the cooling pipe 5 and the cooling oil, improving the heat conduction efficiency. In this way, the heat generated by the motor can be transferred to the cooling oil more quickly to accelerate the heat dissipation process. At the same time, the heat can be distributed more evenly in the cooling pipe 5. By increasing the length and area of the cooling pipe 5, the local accumulation of heat in the cooling pipe 5 can be reduced, and the heat can be dissipated to the surrounding environment more evenly. Furthermore, the space can be utilized more effectively, especially in the case of limited space. By extending the length of the cooling pipe 5 in the axial direction, more cooling pipes 5 may be added in the same space to improve the heat dissipation capacity of the entire heat dissipation system.

In some embodiments, the straight pipe section 51 may include a copper pipe; and/or the bent pipe section 52 may include a plastic hose. Because copper is an excellent thermal conductive material with a high thermal conductivity coefficient, setting the straight pipe section 51 as a copper pipe can conduct the heat generated by the motor more effectively, so that the heat from the motor is transferred to the cooling pipe 5 quickly, improving the heat dissipation efficiency, and the use of the copper pipe can effectively resist oil corrosion and prolong the service life of the cooling pipe 5. Two adjacent straight pipe sections 51 are connected through a plastic hose, facilitating forming and assembly.

In some embodiments, an insulating layer is disposed on an outer peripheral wall of the straight pipe section 51, and/or an insulating layer is provided on an outer peripheral wall of the bent pipe section 52, and a thickness of the insulating layer ranges from 0.2 mm to 0.4 mm. For example, the thickness of the insulating layer is 0.2 mm, 0.25 mm, 0.3 mm or 0.4 mm. When the thickness of the insulating layer is within the above range, for example, the thickness of the insulating layer is 0.3 mm, a short circuit or other electrical problems between electrical components and lines and the cooling pipe 5 can be reduced on the premise of reducing the influence on a wall thickness of the straight pipe section 51 and/or the bent pipe section 52, and the insulating layer can play a safety protection role. The insulating layer may effectively isolate the cooling pipe 5 from electrical components, reducing the risk of electrical faults, effectively preventing the flow of current and reducing the risk of electric leakage.

The present disclosure also provides a method for designing an oil-cooled motor. The oil-cooled motor includes a rotor, a stator 2 and a cooling pipeline, the stator 2 is annularly arranged on an outer peripheral side of the rotor, the stator 2 includes a stator 2 yoke and a plurality of teeth disposed on a peripheral side of the stator 2 yoke, a cooling groove 4 is formed between every two adjacent teeth; the cooling pipeline includes a cooling pipe 5, the cooling pipe 5 includes a plurality of straight pipe sections 51, which are sequentially communicated and arranged at intervals along a circumferential direction of the stator 2, and each straight pipe section 51 is embedded in the corresponding cooling groove 4.

Referring to FIG. 9, the method for designing the oil-cooled motor includes the following steps:

Step S10: obtaining a difference between an oil circuit heat dissipation amount and a copper loss value.

In some embodiments, the in-groove oil cooling structure has a relatively poor cooling effect on the motor under high-speed operating conditions for two reasons: first, the equivalent thermal resistance between a core of the stator 2 and the cooling pipe 5 is large, resulting in a high temperature under the same heat flow condition; second, under the condition of ignoring the heat dissipation of the rotor through a rotating shaft and end air, the heat of the rotor is mainly transferred to the teeth of the stator 2 through the air gap by heat conduction, while the in-groove oil cooling structure has a poor cooling effect on the core of the stator 2 of the motor, thus resulting in a high temperature of the rotor. Therefore, in order to balance the temperature of the motor under overload and high-speed operating conditions, a position of the cooling pipe 5 in the groove of the motor is optimized. When a cooling pipe 5 with a rectangular cross-section is adopted, a width a of the straight pipe section 51 is limited by a width of the cooling groove 4, and a height b of the straight pipe section 51 is limited by a depth of the groove. With the change of the cooling cross-sectional area, the cross-sectional area of the winding 3 may change accordingly. To ensure the electromagnetic performance of the motor, the copper loss of the motor may change accordingly. Therefore, from the perspective of heat dissipation, a size of the cooling pipe 5 needs to be reasonably designed to maximize the difference between the oil circuit heat dissipation amount P in the cooling pipe 5 and the copper loss Pcu, that is, to satisfy the following relational expression: $\Delta P(a,b) = \{P(a,b) - Pcu(a,b)\}$ max, where $P(a,b)$ represents the oil circuit heat dissipation amount when the width of the straight pipe section 51 is a and the height thereof is $b$, $\Delta P(a,b)$ represents the copper loss when the width of the straight pipe section 51 is a and the height thereof is b, and $\Delta P(a,b)$ represents the difference between the oil circuit heat dissipation amount P and the copper loss $Pcu$ when the width of the straight pipe section 51 is a and the height thereof is b.

Step S20: obtaining a size of the cooling pipeline according to the oil circuit heat dissipation amount and the copper loss value.

In some embodiments, for the in-groove oil cooling structure described above, under the condition that a flow rate of cooling oil is constant, the smaller the width of the straight pipe section 51, the better the overall cooling effect; when the width of the straight pipe section 51 is large, the change of the cooling cross-sectional size has a small influence on the cooling effect, which is mainly because the change of the cooling cross-sectional size causes the copper loss in the groove of the stator 2 to change in the opposite direction, resulting in a small change in the difference between the two. Therefore, compared with the water cooling in a housing 1 in the related art, the selection of the cross-sectional size of the cooling oil in the straight pipe section 51 should ensure that the area occupied by the straight pipe section 51 does not change significantly.

In an embodiment, Step S20, obtaining the size of the cooling pipeline according to the oil circuit heat dissipation amount and the copper loss value, includes:

Step S201, determining a corresponding relationship between an inlet and outlet pressure difference of the cooling pipeline and the size of the cooling pipeline when the difference between the oil circuit heat dissipation amount and the copper loss value meets a preset condition. In this way, when the difference meets the preset condition, the corresponding relationship between the inlet and outlet pressure difference of the cooling pipeline and the size of the cooling pipeline may be established.

Step S202, determining the size of the cooling pipeline according to the corresponding relationship between the inlet and outlet pressure difference of the cooling pipeline and the size of the cooling pipe 5. Since the inlet and outlet pressure difference is an important factor for determining the flow rate and speed of the cooling pipeline, the size of the cooling pipeline may be obtained from the established corresponding relationship library under the condition that the specific value of the inlet and outlet pressure difference of the cooling pipeline is determined.

In an embodiment, determining the size of the cooling pipeline according to the corresponding relationship between the inlet and outlet pressure difference of the cooling pipeline and the size of the cooling pipe 5 includes:

Step S2021, determining the inlet and outlet pressure difference of the cooling pipeline according to a kinematic viscosity coefficient of the oil, a wetted perimeter, an oil inlet flow rate, an axial length of oil passage and a density of the cooling oil.

In some embodiments, the expression of the inlet and outlet pressure difference of the cooling pipeline is:

$$h_f = \frac{0.31\tau^{0.25}C^{1.25}l\rho Q^{2.75}}{11.31a^3b^3} + \frac{0.6\rho Q^2}{a^2b^2} \ .$$

Where, $\tau$ is the kinematic viscosity coefficient of the oil (m2/s), C is the wetted perimeter, C = 2(a+b) (m), Q is the oil inlet flow rate (L/min), l is the axial length of oil passage (m), and $\rho$ is the density of the cooling oil. It can be known from the above relational expression that when the groove depth of the cooling groove 4 is constant, the larger the cross-sectional width of the cooling groove 4, the smaller the inlet and outlet pressure difference, and the inlet and outlet pressure difference decreases continuously with the increase of the groove depth. Therefore, when the oil inlet flow rate is constant, the smaller the cross-sectional area of the cooling groove 4, the better the cooling effect.

Step S2022: determining the size of the cooling pipeline according to the corresponding relationship between the inlet and outlet pressure difference of the cooling pipeline and the size of the cooling pipe 5, as well as motor electromagnetism.

In some embodiments, when the oil inlet flow rate is constant, the smaller the cross-sectional area of the cooling groove 4, the better the cooling effect. However, considering the motor performance parameters, it is also necessary to comprehensively take into account the magnetic field distribution of the motor to avoid unnecessary interference with the magnetic field of the motor. Based on simulation analysis, according to the analysis result of the space distribution in the groove of the stator 2 and considering the possibility of processing realization, when it is determined that the cross-sectional width of the cooling groove 4 in the groove is 5 mm and four cooling pipes 5 are provided in parallel, a volume occupied by the cooling pipes 5 is exactly the increment of the volume of the groove after increasing the groove depth. This may ensure the temperature field of the motor under different operating conditions, small iron loss and permanent magnet eddy current loss under high-speed operating conditions, and good cooling effect of the oil-cooled motor under overload and high-speed operating conditions. For the specific comparison diagram of simulation effects, please refer to FIG. 8.

The above descriptions are only the preferred embodiments of the present disclosure, and are not intended to limit the patent scope of the present disclosure. Under the inventive concept of the present disclosure, equivalent structural changes made by using the contents of the specification and drawings of the present disclosure, or direct/indirect application in other related technical fields are all included in the patent protection scope of the present disclosure.

**Claims**

1. An oil-cooled motor, comprising:

a housing;
a rotor, rotatably mounted in the housing;
a stator, fixedly mounted in the housing and annularly arranged on an outer peripheral side of the rotor, the stator comprising a stator yoke and a plurality of teeth disposed on a peripheral side of the stator yoke;
a plurality of windings, wherein each tooth is wound with one winding, and a cooling groove is formed between two adjacent windings; and
a cooling pipeline, comprising a cooling pipe, wherein the cooling pipe comprises a plurality of straight pipe sections, which are sequentially communicated and arranged at intervals along a circumferential direction of the stator, and each straight pipe section is embedded in a corresponding cooling groove.

2. The oil-cooled motor according to claim 1, wherein a plurality of cooling pipes are provided; and the plurality of cooling pipes are arranged at intervals along the circumferential direction of the stator.

3. The oil-cooled motor according to claim 2, wherein the plurality of cooling pipes are arranged in parallel.

**EP 4 773 477 A1**

4. The oil-cooled motor according to claim 2 or 3, wherein four cooling pipes are provided.

5. The oil-cooled motor according to any one of claims 1 to 4, wherein a notch width of the cooling groove is set to a, and 4 mm ≤ a ≤ 6 mm.

6. The oil-cooled motor according to any one of claims 1 to 5, wherein an annular air gap is defined between the stator and the rotor.

7. The oil-cooled motor according to any one of claims 1 to 6, further comprising a heat insulation sleeve extending along an axial direction of the stator and disposed at the air gap.

8. The oil-cooled motor according to claim 7, wherein two ends of the heat insulation sleeve are fixedly connected to the housing so as to enclose to form a separation cavity for separating the stator from the rotor.

9. The oil-cooled motor according to claim 8, wherein the separation cavity is provided with a liquid inlet and a liquid outlet, which are respectively communicated with a liquid inlet end and a liquid outlet end of the cooling pipe.

10. The oil-cooled motor according to any one of claims 1 to 9, wherein the straight pipe section extends along an axial direction of the stator.

11. The oil-cooled motor according to any one of claims 1 to 10, wherein the cooling pipe further comprises a plurality of bent pipe sections, and two adjacent straight pipe sections are communicated by one bent pipe section at the same end in an axial direction of the stator.

12. The oil-cooled motor according to any one of claims 1 to 11, wherein the straight pipe section includes a copper pipe.

13. The oil-cooled motor according to any one of claims 1 to 12, wherein the bent pipe section includes a plastic hose.

14. The oil-cooled motor according to any one of claims 1 to 13, wherein an insulating layer is disposed on an outer peripheral wall of the straight pipe section.

15. The oil-cooled motor according to any one of claims 11 to 14, wherein an insulating layer is provided on an outer peripheral wall of the bent pipe section.

16. The oil-cooled motor according to claim 14 or 15, wherein a thickness of the insulating layer ranges from 0.2 mm to 0.4 mm.

17. The oil-cooled motor according to claim 14 or 15, wherein a thickness of the insulating layer is 0.3 mm.

18. A method for designing an oil-cooled motor, wherein the oil-cooled motor comprises a rotor, a stator, a plurality of windings and a cooling pipeline, the rotor is rotatably mounted in the housing; the stator is fixedly mounted in the housing and annularly arranged on an outer peripheral side of the rotor, and the stator comprises a stator yoke and a plurality of teeth disposed on a peripheral side of the stator yoke, each tooth is wound with one winding, a cooling groove is formed between two adjacent windings, the cooling pipeline comprises a cooling pipe, the cooling pipe comprises a plurality of straight pipe sections, which are sequentially communicated and arranged at intervals along a circumferential direction of the stator, and each straight pipe section is embedded in a corresponding cooling groove; the method for designing the oil-cooled motor comprises the following steps:

    obtaining a difference between an oil circuit heat dissipation amount and a copper loss value; and
    obtaining a size of the cooling pipeline according to the oil circuit heat dissipation amount and the copper loss value.

19. The method for designing the oil-cooled motor according to claim 18, wherein obtaining the size of the cooling pipeline according to the oil circuit heat dissipation amount and the copper loss value comprises:

    determining a corresponding relationship between an inlet and outlet pressure difference of the cooling pipeline and the size of the cooling pipeline when the difference between the oil circuit heat dissipation amount and the copper loss value meets a preset condition; and

8

determining the size of the cooling pipeline according to the corresponding relationship between the inlet and outlet pressure difference of the cooling pipeline and the size of the cooling pipe.

20. The method for designing the oil-cooled motor according to claim 19, wherein determining the size of the cooling pipeline according to the corresponding relationship between the inlet and outlet pressure difference of the cooling pipeline and the size of the cooling pipe comprises:

determining the inlet and outlet pressure difference of the cooling pipeline according to a kinematic viscosity coefficient of oil, a wetted perimeter, an oil inlet flow rate, an axial length of oil passage and a density of the cooling oil; and
determining the size of the cooling pipeline according to the corresponding relationship between the inlet and outlet pressure difference of the cooling pipeline and the size of the cooling pipe as well as motor electromagnetism.

FIG. 1

FIG. 2

FIG. 3

FIG. 4

FIG. 5

FIG. 6

FIG. 7

FIG. 8

Obtaining a difference between an oil circuit heat dissipation amount and a copper loss value — S10

Obtaining a size of a cooling pipeline according to the oil circuit heat dissipation amount and the copper loss value — S20

FIG. 9

# EP 4 773 477 A1

| INTERNATIONAL SEARCH REPORT | International application No. |
|---|---|
| | **PCT/CN2024/142775** |

**A. CLASSIFICATION OF SUBJECT MATTER**

H02K3/24(2006.01)i; H02K9/19(2006.01)i

According to International Patent Classification (IPC) or to both national classification and IPC

**B. FIELDS SEARCHED**

Minimum documentation searched (classification system followed by classification symbols)

IPC: H02K

Documentation searched other than minimum documentation to the extent that such documents are included in the fields searched

Electronic data base consulted during the international search (name of data base and, where practicable, search terms used)

CNTXT, WPABS, ENTXT, ENTXTC, DWPI, CNKI, IEEE: 电机, 电动机, 马达, 油冷, 定子, 转子, 绕组, 线圈, 冷却, 散热, 凹, 槽, 管, motor, oil, cooled, stator, rotor, rotator, winding, coil, cooling, refrigeration, heat, hot, concave, groove, tube, pipe

**C. DOCUMENTS CONSIDERED TO BE RELEVANT**

| Category* | Citation of document, with indication, where appropriate, of the relevant passages | Relevant to claim No. |
|---|---|---|
| PX | CN 117879214 A (VOYAH AUTOMOBILE TECHNOLOGY CO., LTD.) 12 April 2024 (2024-04-12) claims 1-10, description, paragraphs 2-74, and figures 1-9 | 1-20 |
| X | CN 107276275 A (HUAZHONG UNIVERSITY OF SCIENCE AND TECHNOLOGY) 20 October 2017 (2017-10-20) description, paragraphs 2-38, and figures 1-5 | 1-6, 10-20 |
| Y | CN 107276275 A (HUAZHONG UNIVERSITY OF SCIENCE AND TECHNOLOGY) 20 October 2017 (2017-10-20) description, paragraphs 2-38, and figures 1-5 | 7-9 |
| Y | CN 103138427 A (MAXON MOTOR AG) 05 June 2013 (2013-06-05) description, paragraphs 2-26, and figure 1 | 7-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 March 2025** | **20 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/142775**

| Patent document cited in search report | | | Publication date (day/month/year) | Patent family member(s) | | | Publication date (day/month/year) |
|---|---|---|---|---|---|---|---|
| CN | 117879214 | A | 12 April 2024 | None | | | |
| CN | 107276275 | A | 20 October 2017 | None | | | |
| CN | 103138427 | A | 05 June 2013 | CN | 103138427 | B | 16 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023118146454